(19) Europäisches Patentamt
European Patent Office
Office européen des brevets

(11) **EP 4 572 216 A1**

(12) **EUROPEAN PATENT APPLICATION**
published in accordance with Art. 153(4) EPC

(43) Date of publication:
**18.06.2025 Bulletin 2025/25**

(21) Application number: **23902279.1**

(22) Date of filing: **20.10.2023**

(51) International Patent Classification (IPC):
**H04L 5/00** *(2006.01)*

(52) Cooperative Patent Classification (CPC):
**H04L 5/00; H04L 27/26**

(86) International application number:
**PCT/CN2023/125690**

(87) International publication number:
**WO 2024/125079 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.12.2022 CN 202211620318**

(71) Applicant: **ZTE Corporation**
**Shenzhen, Guangdong 518057 (CN)**

(72) Inventors:
• **DUAN, Xiangyang**
**Shenzhen, Guangdong 518057 (CN)**

• **XIA, Shuqiang**
**Shenzhen, Guangdong 518057 (CN)**
• **HU, Liujun**
**Shenzhen, Guangdong 518057 (CN)**
• **YU, Guanghui**
**Shenzhen, Guangdong 518057 (CN)**
• **MA, Yihua**
**Shenzhen, Guangdong 518057 (CN)**
• **YUAN, Zhifeng**
**Shenzhen, Guangdong 518057 (CN)**
• **WANG, Zhongbin**
**Shenzhen, Guangdong 518057 (CN)**

(74) Representative: **Aipex B.V.**
**Vestdijk 51**
**5611 CA Eindhoven (NL)**

(54) **SIGNAL PROCESSING METHOD, COMMUNICATION DEVICE, STORAGE MEDIUM AND PROGRAM PRODUCT**

(57) Provided are a signal processing method, a communication device, a storage medium, and a program product. The method includes: determining a first subcarrier set and a second subcarrier set in to-be-transmitted information, where a first time domain sequence corresponding to the first subcarrier set is obtained according to communication information; obtaining a projection signal according to a vector corresponding to a first dataset and a target signal, where the first dataset includes at least part of data in the first time domain sequence corresponding to the first subcarrier set; obtaining a second time domain sequence corresponding to the second subcarrier set according to the projection signal; superimposing the first time domain sequence and the second time domain sequence to obtain a time domain signal corresponding to the to-be-transmitted information; and sending the time domain signal.

FIG. 2

**Description**

CROSS-REFERENCE TO RELATED APPLICATION(S)

This application claims priority to Chinese Patent Application No. 202211620318.0 filed Dec. 15, 2022, the disclosure of which is incorporated herein by reference in its entirety.

TECHNICAL FIELD

Embodiments of the present application relate to the field of communication technology and, in particular, to a signal processing method, a communication device, a storage medium, and a program product.

BACKGROUND

The fusion of communication and sensing (communication data and sensing data), which is simply referred to as sensing and communication fusion, is an important technology in future communication networks such as 6G. Communication is the transmission of information, and sensing is the detection and information acquisition of an environment such as a communication environment. An integrated sensing and communication system can simultaneously achieve communication data transmission and target sensing by using the same time, frequency, power, and other resources.

In the related art, integrated sensing and communication resource allocation are performed on communication information and sensing information in a time division or frequency division manner where sensing resources are not fully utilized. How to match receivers according to different communication environments is an urgent problem to be discussed and solved.

SUMMARY

Embodiments of the present application provide a signal processing method, a communication device, a storage medium, and a program product, so as to further improve the utilization of communication resources in related technologies of integrated sensing and communication.

In a first aspect, embodiments of the present application provide a signal processing method. The method includes determining a first subcarrier set and a second subcarrier set in to-be-transmitted information, where a first time domain sequence corresponding to the first subcarrier set is obtained according to communication information; obtaining a projection signal according to a vector corresponding to a first dataset and a target signal, where the first dataset includes at least part of data in the first time domain sequence corresponding to the first subcarrier set; obtaining a second time domain sequence corresponding to the second subcarrier set according to the projection signal; superimposing the first time domain sequence and the second time domain sequence to obtain a time domain signal corresponding to the to-be-transmitted information; and sending the time domain signal.

In a second aspect, embodiments of the present application provide a signal processing method. The method includes receiving a to-be-processed signal, where time domain data corresponding to the to-be-processed signal include a first time domain sequence and a second time domain sequence; and obtaining a target signal according to the second time domain sequence.

In a third aspect, embodiments of the present application provide a communication device. The communication device includes at least one processor and at least one memory configured to store at least one program. When executed by the at least one processor, the at least one program causes the at least one processor to perform the signal processing method described in the first or second aspect.

In a fourth aspect, embodiments of the present application provide a computer-readable storage medium. The computer-readable storage medium stores computer-executable instructions for performing the signal processing method described in the first or second aspect.

In a fifth aspect, embodiments of the present application provide a computer program product. The computer program product includes a computer program or computer instructions stored in a computer-readable storage medium. A processor of a computer device is configured to read the computer program or the computer instructions from the computer-readable storage medium and execute the computer program or the computer instructions, causing the computer device to perform the signal processing method described in the first or second aspect.

BRIEF DESCRIPTION OF DRAWINGS

FIG. 1 is a structural diagram of a communication and sensing system.

FIG. 2 is a flowchart of a signal processing method according to an embodiment of the present application.

FIG. 3 is a flowchart of a signal processing method according to an embodiment of the present application.

FIG. 4 is a flowchart of a signal processing method according to an embodiment of the present application.

FIG. 5 is a flowchart of a signal processing method according to an embodiment of the present application.

FIG. 6 is a flowchart of a signal processing method according to an embodiment of the present application.

FIG. 7 is a flowchart of a signal processing method according to an embodiment of the present application.

FIG. 8 is a flowchart of a signal processing method according to an embodiment of the present application.

FIG. 9 is a flowchart of a signal processing method according to an embodiment of the present application.

FIG. 10 is a schematic diagram of projections of data in a first time domain sequence $c(n)$ corresponding to a first subcarrier set on basic sensing signals.

FIG. 11 is a structural diagram of a communication device according to an embodiment of the present application.

## DETAILED DESCRIPTION

To make the objectives, technical solutions, and advantages of the present application clearer, the following describes the present application in detail in conjunction with the drawings and embodiments. It is to be understood that the embodiments described herein are intended to explain the present application, not to limit the present application.

It is to be noted that although function modules are divided in schematic diagrams of apparatuses and logical sequences are illustrated in flowcharts, in some cases, the steps illustrated or described may be performed by modules different from those divided in the apparatuses and in sequences different from those in the flowcharts. Terms such as "first" and "second" in the description, claims, and above drawings are used to distinguish between similar objects and are not necessarily used to describe a particular order or sequence.

In the description of embodiments of the present application, words such as disposed, mounted, and connected are to be understood in a broad sense unless otherwise expressly limited, and those skilled in the art can reasonably determine specific meanings of the preceding words in the embodiments of the present application in conjunction with the specific contents of the technical solutions.

In the embodiments of the present application, words such as "further", "exemplarily", and "optionally" are used to indicate examples, illustration, or description and are not to be interpreted as being more preferred or more advantageous than other embodiments or designs. The words such as "further", "exemplarily", and "optionally" are intended to present relevant concepts in concrete manners.

Embodiments of the present application may be applied to various communication systems, such as a Global System for Mobile Communications (GSM), a code-division multiple access (CDMA) system, a wideband code-division multiple access (WCDMA) system, a General Packet Radio Service (GPRS), a long-term evolution (LTE) system, an LTE Advanced (LTE-A) system, a Universal Mobile Telecommunications System (UMTS), 5G, beyond fifth generation (B5G), and a sixth-generation (6G) system.

In the embodiments of the present application, a terminal may be a mobile phone, a Pad, a computer with a radio transceiving function, a virtual reality (VR) terminal, an augmented reality (AR) terminal, an Internet of things (IoT) terminal device, a wireless terminal in industrial control, a wireless terminal in self-driving, a wireless terminal in remote medical services, a wireless terminal in a smart grid, a wireless terminal in transportation safety, a wireless terminal in a smart city, a wireless terminal in smart home, a user equipment (UE), a vehicle-mounted communication apparatus, a vehicle-mounted communication chip, a roadside unit, or a communication apparatus in a roadside unit. Alternatively, the terminal may be a wearable device/wearable smart device, such as a bracelet, glasses, gloves, a watch, clothing, or another portable device integrated with the clothing or accessory of a user.

The technical solutions relate to the integrated sensing and communication technology. In the integrated sensing and communication technology, the fusion of integrated sensing and communication with a waveform design is particularly important. In terms of communication signal characteristics, orthogonal frequency-division multiplexing (OFDM) waveforms have significant advantages in spectrum efficiency, interference suppression, good adaptation to multiple-input and multiple-output (MIMO) technology, and other aspects and have been widely applied in 4G/5G mobile systems. Moreover, since the ambiguity function of OFDM signals is in the shape of a single sharp peak with a good range resolution characteristic, the OFDM waveforms can be relatively well applied to wireless sensing technology. Therefore, the fusion of integrated sensing and communication with the waveform design in the technical solutions adopts OFDM as a main modulation manner.

In OFDM waveform-based communications, communication information is carried on multiple subcarriers after being modulated. Due to random information sending, time domain or frequency domain sequences corresponding to different OFDM symbols are random at a transmitting end. However, sensing signals/information is usually known sequences. When the sensing signals/information is sent using OFDM waveforms, time domain or frequency domain sequences corresponding to these OFDM symbols are also known. That is, communication information and sensing information differ in the OFDM waveform-based communications. Due to a difference between design goals of the communication information and the sensing information, resource allocation in the integrated sensing and communication is performed in a time division or frequency division manner. However, in the time division manner, a target cannot be continuously tracked; in the frequency division manner, a sensing resolution is likely to decrease.

Compared with a design for separating communication data from sensing data, an integrated sensing and communication system can implement the transmission of the communication data and the transmission of the sensing data (that is, target sensing) due to the use of the same time, frequency, power, and other resources so that communication resources can be relatively well utilized. However, in the related art, sensing resources are not fully utilized in both the time division and frequency division manners, and the advantages of the integrated sensing and communication system cannot be further utilized.

To describe the technical solutions in detail, an application scenario based on the OFDM technology and related to the integrated sensing and communication technology is used as an example to illustrate an application scenario in embodiments of the present application.

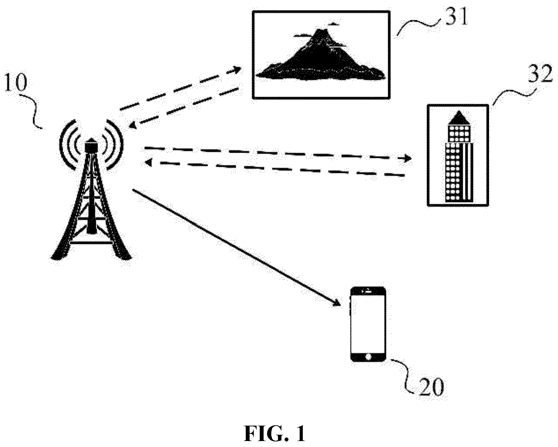

FIG. 1 is a structural diagram of a communication and sensing system. As shown in FIG. 1, the application scenario of the integrated sensing and communication technology includes a base station 10, a terminal 20, a first sensing target 31, and a second sensing target 32. The base station 10 and the terminal 20 may use signals sent by themselves to communicate with each other or sense a target. For example, the base station 10 may send a signal to the surrounding environment (the first sensing target 31 or the second sensing target 32) through an effective payload signal, and the signal is transmitted to the base station 10 through the target so that the base station 10 images the target to obtain sensing data of a communication environment. When the base station 10 communicates with the terminal 20, a signal sent by the base station 10 carries communication information and sensing information. When receiving the signal from the base station 10, the terminal 20 can obtain not only communication data but also the sensing data.

In some technologies, integrated sensing and communication resources are allocated in a time division or frequency division manner. However, in the above manners, resources are difficult to fully utilize, the target is difficult to continuously track in the time division manner, and a sensing resolution is relatively low in the frequency division manner.

For example, the embodiments of the present application are described below by using a communication system transmitting end such as a transmitter and a communication system receiving end such as a receiver as an example. More specifically, the embodiments of the present application provide OFDM waveform-based processing, sending, and receiving of integrated sensing and communication signals. An OFDM symbol includes at least the length of a cyclic prefix and the length of a useful/effective part.

The embodiments of the present application provide a signal processing method, a communication device, a storage medium, and a program product. A signal is processed so that a to-be-transmitted signal carries both communication information and target information. The communication information and the target information are processed so that sensing information can be obtained, and a target can be continuously sensed without affecting a sensing resolution. Since a sent target signal uses part of power and resources of a communication signal, not only can the utilization of communication resources be further improved, but also transmit power of a sensing signal can be reduced.

The embodiments of the present application are further described below with reference to the drawings.

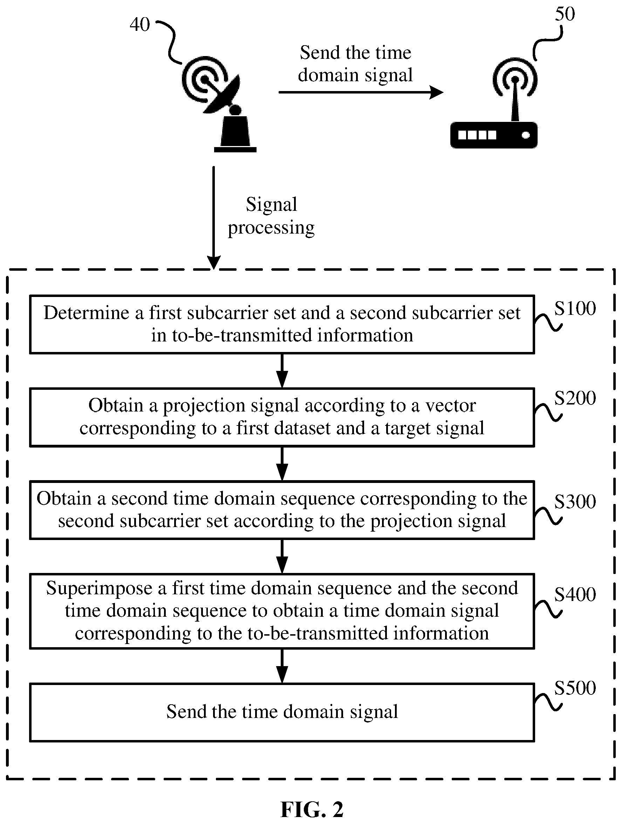

FIG. 2 is a flowchart of a signal processing method according to an embodiment of the present application. As shown in FIG. 2, the signal processing method may be applied to a signal transmitting device such as a transmitter 40. In the embodiment of FIG. 2, the signal processing method may include, but is not limited to, S100, S200, S300, S400, and S500.

In S100, a first subcarrier set and a second subcarrier set in to-be-transmitted information are determined.

In an embodiment, the to-be-transmitted information is information to be sent by a transmitting end and may carry communication information and other information such as target information. The target information may be sensing information or other desired information or preset information.

In an embodiment, the to-be-transmitted information is an OFDM signal.

In another embodiment, the first subcarrier set and the second subcarrier set are subcarrier sets of type 1 and type 2 of an OFDM symbol, respectively. That is, available subcarriers on the OFDM symbol are divided into at least the first subcarrier set and the second subcarrier set.

For example, the first subcarrier set is $S_1(m)$, and a time domain sequence corresponding to the first subcarrier set is c(n). c(n) may be obtained according to the communication information to be sent.

In S200, a projection signal is obtained according to a vector corresponding to a first dataset and a target signal.

In an embodiment, the first dataset includes at least part of data in a first time domain sequence corresponding to the first subcarrier set.

In another embodiment, the first dataset includes last K data in the first time domain sequence corresponding to the first subcarrier set.

In an embodiment, the target signal is a basic sensing signal, and the projection signal is obtained according to a projection of the first dataset on the basic sensing signal. The target signal may include one or more basic sensing signals.

When the target signal includes one sensing signal, one projection signal may be obtained in the preceding manner. When the target signal includes multiple sensing signals, multiple projection signals may be obtained in the preceding manner, that is, the projection signal may include multiple projection sub-signals.

For example, the first time domain sequence c(n) corresponding to the first subcarrier set includes $M_1$ data from which K data are selected to form the first dataset c, where $K \leq M_1$. The selected K data are c(N-K), c(N-K+1), ..., c(N-1), and the first dataset c = [c(N-K), c(N-K+1), ..., c(N-1)]$^T$. For example, the target signal to be sent is a sensing signal $Ae^{j\theta}s$ to be sent, where s denotes the basic sensing signal, A denotes an amplitude of the sensing signal, and $\theta$ denotes a phase of the sensing signal. Then, the projection signal can be obtained according to the first dataset c and the basic sensing signal s. It is assumed that the projection signal is expressed as $ae^{j\varnothing}s$, that is, a projection of the vector of the first dataset c on the basic sensing signal s is $ae^{j\varnothing}s$. The basic sensing signal s is usually known. It is to be understood that if multiple basic sensing signals si, $s_2$, and $s_3$ are present, multiple projection signals can be obtained.

In S300, a second time domain sequence corresponding to the second subcarrier set is obtained according to the projection signal.

In S400, the first time domain sequence and the second time domain sequence are superimposed so that a time domain signal corresponding to the to-be-transmitted information is obtained.

In an embodiment, inverse Fourier transform is performed on a first subcarrier signal and a second subcarrier signal. Assuming that a transform result is z(n),

$$z(n) = \sum_{m=0}^{M_1} C[S_1(m)] e^{j2\pi \frac{S_1(m)n}{N}} + \sum_{m=0}^{M_2} R[S_2(m)] e^{j2\pi \frac{S_2(m)n}{N}}, n = 0,1,\ldots,N-1.$$

In S500, the time domain signal is sent.

In an embodiment, the obtained time domain signal is sent to a receiving end.

In another embodiment, when sending the time domain signal, the transmitter may also send assistance information about the target signal. The assistance information may be at least one of a sequence corresponding to the target signal, an amplitude corresponding to the target signal, or a phase corresponding to the target signal.

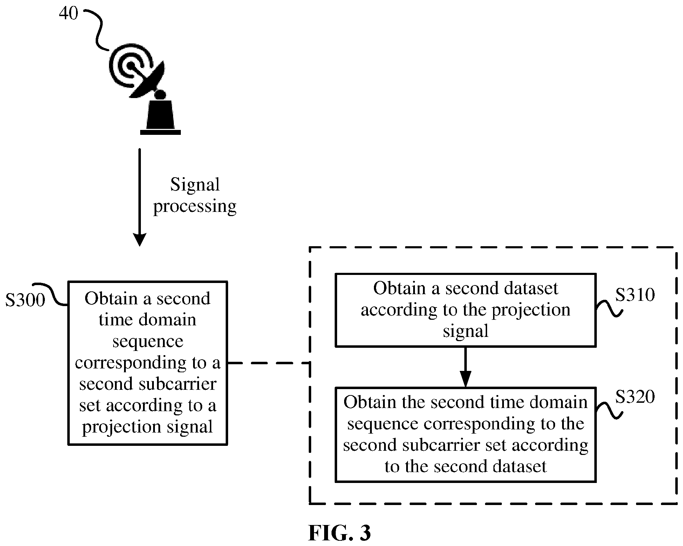

FIG. 3 is a flowchart of a signal processing method according to an embodiment of the present application, which shows a further description of S300. As shown in FIG. 3, S300 may include, but is not limited to, S310 and S320.

In S310, a second dataset is obtained according to the projection signal.

In an embodiment, the second dataset includes at least part of data in the second time domain sequence corresponding to the second subcarrier set.

In another embodiment, the second dataset includes last K data in the second time domain sequence corresponding to the second subcarrier set.

For example, the second subcarrier set is $S_2(m)$, a time domain sequence corresponding to the second subcarrier set is the second time domain sequence r(n), and at least part of the data in the second time domain sequence r(n) are defined as the second dataset r. Specifically, the last K data in the second time domain sequence r(n) may be defined as the second dataset r.

In S320, the second time domain sequence corresponding to the second subcarrier set is obtained according to the second dataset.

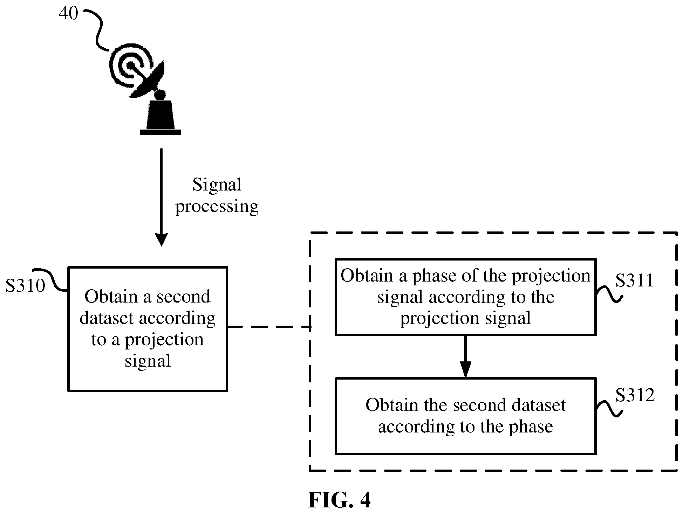

FIG. 4 is a flowchart of a signal processing method according to an embodiment of the present application, which shows a further description of S310. As shown in FIG. 4, S310 may include, but is not limited to, S311 and S312.

In S311, a phase of the projection signal is obtained according to the projection signal.

In an embodiment, the projection signal includes a modulus and a phase.

For example, assuming that the projection signal is expressed as $ae^{j\varnothing}s$, a denotes the modulus of the projection signal, that is, a modulus of the projection of the vector c on the vector s, and Ø denotes the phase of the projection signal, that is, a phase of the projection of the vector c on the vector s.

In S312, the second dataset is obtained according to the phase.

In an embodiment, the second dataset r is determined by the following formula:

$$r = (A - a)e^{j\varnothing}s + ae^{j\varnothing}s - c = Ae^{j\varnothing}s - c,$$

where A denotes the amplitude of the sensing signal, Ø denotes the phase of the projection signal, s denotes the basic sensing signal, and c denotes the first dataset.

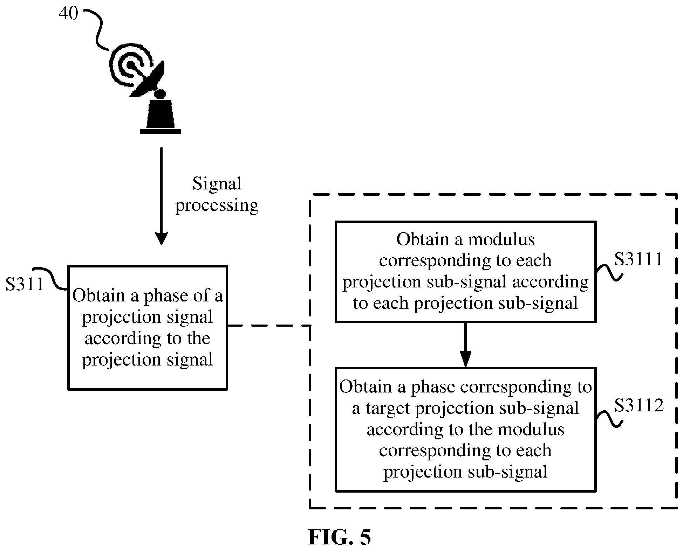

FIG. 5 is a flowchart of a signal processing method according to an embodiment of the present application, which shows a further description of S311. As shown in FIG. 5, S311 may include, but is not limited to, S3111 and S3112.

In S3111, a modulus corresponding to each projection sub-signal is obtained according to each projection sub-signal.

In an embodiment, the transmitter has multiple linearly independent basis sensing signals. Multiple projection signals can be obtained according to the first dataset and the multiple basic sensing signals. Each projection signal is a projection sub-signal. Each projection sub-signal includes a corresponding modulus and phase.

For example, it is assumed that the transmitter has at most W linearly independent basic sensing signals ($W \leq K$), and the w-th basic sensing signal is $s_w$, where $s_w = [s_w(0), s_w(1), ..., s_w(K-1)]^T$, and $w = 0, 1, 2, ..., W-1$. According to the vector corresponding to the first subcarrier set c and the basic sensing signal $s_w$, each projection signal $a_w e^{j\emptyset_w s_w}$, $w = 0,1,..., W-1$ is obtained. Then, the modulus $a_w$ corresponding to each projection signal is obtained.

In S3112, a phase corresponding to a target projection sub-signal is obtained according to the modulus corresponding to each projection sub-signal.

In an embodiment, according to the modulus corresponding to each projection sub-signal, one largest modulus is selected, or multiple moduli greater than a particular value/preset value are selected. Projection sub-signals corresponding to the selected one or more moduli are target projection sub-signals. Then, one or more phases corresponding to one or more projection sub-signals are determined according to the target projection sub-signals.

For example, it is assumed that the projection signal is $a_w e^{j\emptyset w} s_w$, $w = 0,1,..., W-1$. Among $a_w$, $s_1$ with the largest value or T $s_T$ greater than the particular value/preset value are determined. Projection signals corresponding to the determined moduli are the target projection signals $a_1 e^{j\emptyset_s 1}$ or $a_T e^{j\emptyset_T} s_T$, and one phase $\emptyset_1$ or multiple phases $\emptyset_T$ are determined.

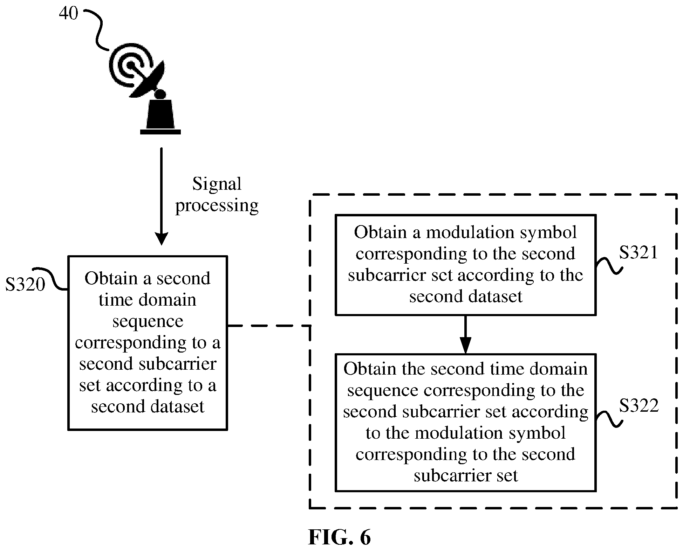

FIG. 6 is a flowchart of a signal processing method according to an embodiment of the present application, which shows a further description of S320. As shown in FIG. 6, S320 may include, but is not limited to, S321 and S322.

In S321, a modulation symbol corresponding to the second subcarrier set is obtained according to the second dataset.

In an embodiment, the modulation symbol R corresponding to the second subcarrier set is determined by the following formula:

$$R = Q^H (QQ^H)^{-1} r.$$

Q denotes a $K \times M_2$ matrix. Specifically, K rows and $M_2$ columns of an N-point inverse Fourier transform matrix are extracted so that the matrix Q is obtained.

In S322, the second time domain sequence corresponding to the second subcarrier set is obtained according to the modulation symbol corresponding to the second subcarrier set.

In an embodiment, the second time domain sequence is obtained by the following formula:

$$r(n) = \sum_{m=0}^{M_2} R[S_2(m)] \, e^{j 2\pi \frac{S_2(m)n}{N}}.$$

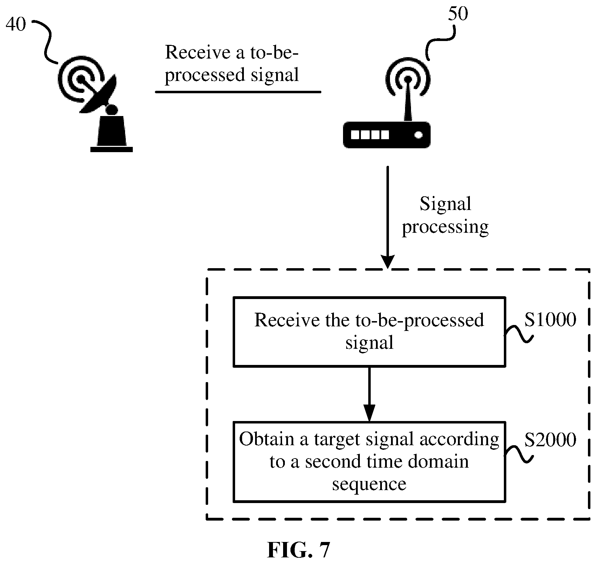

FIG. 7 is a flowchart of a signal processing method according to an embodiment of the present application. As shown in FIG. 7, the signal processing method may be applied to a signal receiving device such as a receiver 40. In the embodiment of FIG. 7, the signal processing method may include, but is not limited to, S1000 and S2000.

In S1000, a to-be-processed signal is received.

In an embodiment, the receiver receives the to-be-processed signal sent by a transmitter, where time domain data corresponding to the to-be-processed signal carry data in a first time domain sequence and data in a second time domain sequence.

For example, the receiver receives the to-be-processed signal sent by the transmitter, where the time domain data corresponding to the to-be-processed signal are $z(n)$. $z(n)$ includes the first time domain sequence $c(n)$ and the second time domain sequence $r(n)$.

In S2000, a target signal is obtained according to the second time domain sequence.

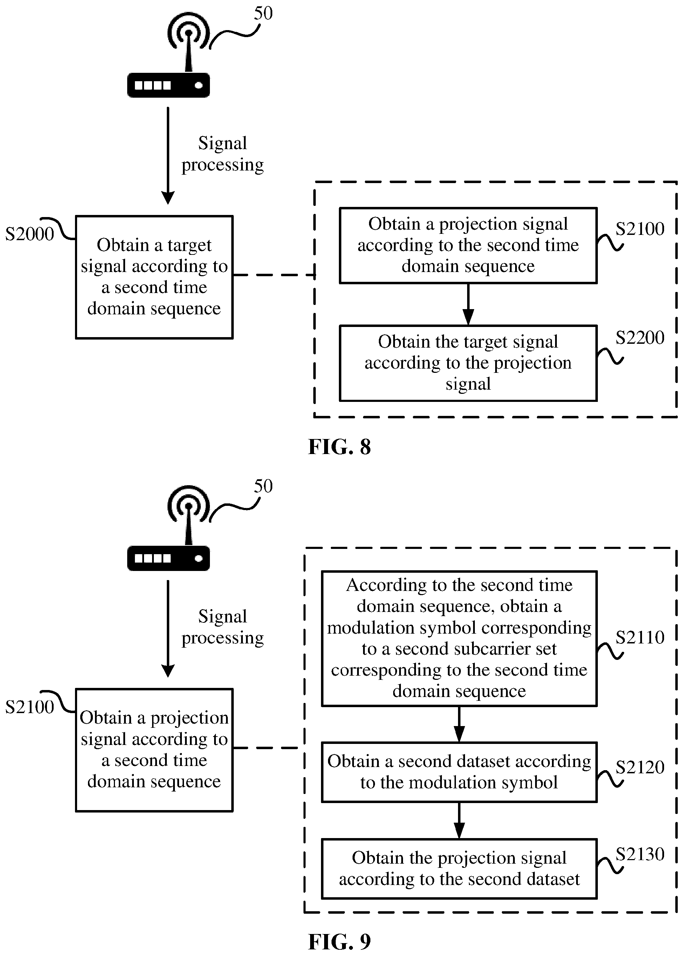

FIG. 8 is a flowchart of a signal processing method according to an embodiment of the present application, which shows a further description of S2000. As shown in FIG. 8, S2000 may include, but is not limited to, S2100 and S2200.

In S2100, a projection signal is obtained according to the second time domain sequence.

In S2200, the target signal is obtained according to the projection signal.

In an embodiment, the projection signal is $a e^{j\emptyset} s$. The target signal may be obtained according to the preceding formula.

FIG. 9 is a flowchart of a signal processing method according to an embodiment of the present application, which shows a further description of S2100. As shown in FIG. 9, S2100 may include, but is not limited to, S2110, S2120, and S2130.

In S2110, according to the second time domain sequence, a modulation symbol corresponding to a second subcarrier set corresponding to the second time domain sequence is obtained.

In an embodiment, the second time domain sequence $r(n) = \sum_{m=0}^{M_2} R[S_2(m)] \, e^{j2\pi \frac{S_2(m)n}{N}}$, $n = 0,1,..., N$ - 1. The modulation symbol R corresponding to the second subcarrier set may be obtained according to the preceding formula.

In S2120, a second dataset is obtained according to the modulation symbol.

In an embodiment, the modulation symbol $R = Q^H(QQ^H)^{-1}r$. The second dataset r may be obtained according to the preceding formula. The second dataset may include at least part of the data in the second time domain sequence corresponding to the second subcarrier set.

In S2130, the projection signal is obtained according to the second dataset.

In an embodiment, the second dataset $r = (A - a)e^{j\varnothing}s + ae^{j\varnothing}s - c = Ae^{j\varnothing}s - c$. The projection signal may be obtained according to the preceding formula.

A detailed description of the signal processing method according to embodiments of the present application is provided using the examples below.

Example 1

Example 1 provides a signal processing manner. Through a reasonable setting, a sensing signal is sent twice on one OFDM symbol, fully utilizing the characteristics of an OFDM cyclic prefix, extending functions of a conventional cyclic prefix, and improving sensing performance.

It is assumed that an OFDM waveform-based integrated sensing and communication symbol includes (L+N) samples, where L denotes the length of a cyclic prefix of the OFDM symbol, and N denotes the length of a useful part of the OFDM symbol and also the number of points of inverse Fourier transform for generating an OFDM signal. It is assumed that the length of the sensing signal sent on the symbol is K, where K is not greater than the number U of available subcarriers on the OFDM symbol, and U is usually less than N. The sensing signal $Ae^{j\theta}s$ is sent, where s = [s(0), s(1), ..., s(K-1)]$^T$, s denotes a basic sensing signal, s$^H$s = 1, A denotes an amplitude of the sensing signal, $\theta$ denotes a phase of the sensing signal, and the phase may be a value varying with communication information or may be a preset value.

Based on the preceding assumptions, a signal processing flow in this example includes at least S110 to S160.

In S110, a first subcarrier set and a second subcarrier set in the OFDM symbol are determined.

It is to be noted that with a guard band for sending no signal excluded, the available subcarriers on the OFDM symbol are divided into the first subcarrier set and the second subcarrier set. It is assumed that a subcarrier index included in the first subcarrier set is $S_1(m)$, where m = 0, 1, ..., Mi-1, and a subcarrier index included in the second subcarrier set is $S_2(m)$, where m = 0, 1, ..., $M_2$-1, $M_1 + M_2 \le U$, $K \le M_2 < U$, and indexes in the first subcarrier set and the second subcarrier set do not overlap. Additionally, the first subcarrier set $S_1(m)$ is modulated by $C[S_1(m)]$, where m = 0, 1, ..., $M_1$-1, $C[S_1(m)]$ may usually be determined according to the communication information to be sent, and $C[S_1(m)]$ is assumed to be a known value; and the second subcarrier set $S_2(m)$ is modulated by $R[S_2(m)]$, where m = 0, 1, ..., $M_2$-1. It is defined that C = [$S_1(0)$, $S_1(1)$, ..., $S_1(M_1$-1)]$^T$ and R = [$S_2(0)$, $S_2(1)$, ..., $S_2(M_2$-1)]$^T$.

In S120, last K data in a first time domain sequence c(n) corresponding to the first subcarrier set and a projection of the last K data on the basic sensing signal s are determined, which includes the following:

In S121, the last K data (a first dataset) in the first time domain sequence corresponding to the first subcarrier set are determined.

It is to be noted that c(n) is N-point inverse Fourier transform of the signal sent on the first subcarrier set in S110.

Specifically, c(n) is defined as follows: $c(n) = \sum_{m=0}^{M_1} C[S_1(m)] \, e^{j2\pi \frac{S_1(m)n}{N}}$, $n = 0,1,..., N$ - 1, and the last K data in the first time domain sequence c(n) are the first dataset c(N-K), c(N-K+1), ..., c(N-1).

It is to be understood that it is defined that c = [c(N-K), c(N-K+1), ..., c(N-1)]$^T$, where c denotes a vector of the last K data in the first time domain sequence corresponding to the first subcarrier set, that is, a vector corresponding to the first dataset.

In S122, a projection of the vector c corresponding to the first dataset, that is, the vector c of the last K data, on the basic sensing signal s is determined.

It is to be noted that a projection signal of the vector c on the basic sensing signal s is $ae^{j\varphi}s$, where $a = |s^Hc|$ and denotes a modulus of the projection of the vector c on the vector s, $\varphi = arg(s^Hc)$ and denotes a phase of the projection of the vector c on the vector s, and arg(z) denotes a main value of an argument of a complex number z and ranges from $-\pi$ to $\pi$.

In S130, last K data (a second dataset) in a second time domain sequence r(n) corresponding to the second subcarrier set are determined.

It is to be noted that $r = (A - a)e^{j\varnothing}s + ae^{j\varnothing}s - c = Ae^{j\varnothing}s - c$, where the last K data in the second time domain sequence corresponding to the second subcarrier set are the second dataset r(N-K), r(N-K+1), ..., r(N-1). It is defined that r = [r(N-K), r(N-K+1), ..., r(N-1)]$^T$.

In this example, the amplitude A of the sensing signal is assumed to be a preset value or a known value to ensure the stability of the sensing performance. Additionally, $\|r\|_2^2 = r^H r =$ $c^H c + A^2 - 2Aa$. When $A = a$, $\|r\|_2^2 = c^H c - a^2$ is a minimum value, indicating that when $A = a$, the sensing performance depends on an amplitude of a projection of a communication signal on the sensing signal, which has the advantage of reducing a power consumption of a transmitter on the sensing signal.

In S140, a modulation symbol vector R corresponding to the second subcarrier set is determined.

It is to be noted that $R = Q^H(QQ^H)^{-1}r$, where Q is a $K \times M_2$ matrix, and K rows and $M_2$ columns of an N-point inverse Fourier transform matrix are extracted so that Q is obtained. In this example, the extracted rows are lower K rows of the N-point inverse Fourier transform matrix, and indexes of the extracted columns are $S_2(m)$, where m = 0, 1, ..., $M_2$-1.

It is to be understood that the preceding target sensing signal may be sent at other positions of OFDM, for example, at the (N-K-T)-th position to the (N-1-T)-th position of the useful part of the symbol (where T is an integer greater than 0 and satisfies that T ≤ N-K). Then, the matrix Q selected in this step is obtained by extracting the K rows and $M_1$ columns of the N-point inverse Fourier transform matrix, that is, the extracted rows are the (N-K-T)-th row to the (N-1-T)-th row of the N-point inverse Fourier transform matrix, and the indexes of the extracted columns are $S_2(m)$, where m = 0, 1, ..., $M_2$-1.

In S150, a result of N-point inverse Fourier transform of the time domain sequences for the first subcarrier set and the second subcarrier set is determined.

It is to be noted that $z(n) = \sum_{m=0}^{M_1} C[S_1(m)] e^{j2\pi \frac{S_1(m)n}{N}} + \sum_{m=0}^{M_2} R[S_2(m)] e^{j2\pi \frac{S_2(m)n}{N}}$, n = 0,1,..., N - 1, where $\sum_{m=0}^{M_1} C[S_1(m)] e^{j2\pi \frac{S_1(m)n}{N}}$ may adopt a calculation result in S121.

In S160, the cyclic prefix is added and a to-be-transmitted signal is sent.

It is to be noted that when $\theta$ is the preset value, the to-be-transmitted signal is $z(n)e^{j(\theta-\varphi)}$, n = 0,1,..., N - 1, which is used as a time domain sequence of the useful part of the OFDM symbol and sent after an L-point cyclic prefix is added. When $\theta$ is the value varying with the communication information, $\theta = \varphi$, and the to-be-transmitted signal is z(n) in S150, which is used as the time domain sequence of the useful part of the OFDM symbol and sent after the L-point cyclic prefix is added.

In some examples, sensing assistance information may also be sent. The sensing assistance information includes at least one of a sequence, an amplitude, or a phase of the target sensing signal, and the sensing assistance information is sent to a communication receiving end before a transmitting end sends the preceding OFDM.

In this step, the target sensing signal corresponds to last K samples of the OFDM symbol. In this manner, the cyclic prefix of the OFDM symbol also includes the content of the target sensing signal, thereby extending the functions of the traditional cyclic prefix of the OFDM symbol and improving the sensing performance. Particularly, when K = L, a sequence included in the cyclic prefix of the OFDM symbol is the same as a complete sequence of the target sensing signal, thereby maximizing an improvement of the sensing performance through the cyclic prefix.

In this example, the target sensing signal uses part of power of the communication signal, thereby reducing the transmit power of the target sensing signal while ensuring that the total transmit power of the target sensing signal is certain. Although the target sensing signal uses part of the power of the communication signal, no negative effect is caused to the performance of the communication signal. Additionally, the communication receiving end may perform channel estimation using the target sensing signal, thereby further reducing an overhead of using traditional pilot signals and improving the performance of a communication system.

Example 2

Example 2 provides a signal processing manner where a transmitter determines one optimal target sensing signal according to moduli of projections of last K data in a first time domain sequence c(n) corresponding to a first subcarrier set on basic sensing signals, where the target sensing signal is sent twice on one OFDM symbol.

It is assumed that an OFDM waveform-based integrated sensing and communication symbol includes (L+N) samples, where L denotes the length of a cyclic prefix of the OFDM symbol, and N denotes the length of a useful part of the OFDM symbol and also the number of points of inverse Fourier transform for generating an OFDM signal. Additionally, the length of the sensing signal sent on the symbol is K, where K is not greater than the number U of available subcarriers on the OFDM symbol, and U is usually less than N. The transmitter has at most W linearly independent basic sensing signals (W ≤ K), and the w-th basic sensing signal is $s_w$, where $s_w = [s_w(0), s_w(1), ..., s_w(K-1)]^T$, w = 0, 1, 2, ..., W-1, and $s_w^H s_w = 1$. The sent target sensing signal is $Ae^{j\theta}s_k$, where A denotes an amplitude of the target sensing signal, $\theta$ denotes a phase of the target sensing signal, the phase may a value varying with communication information or may be a preset value, and k is one of 0, 1, 2, ..., W-1.

Based on the preceding assumptions, a signal processing flow in this example includes at least S210 to S280.

In S210, the first subcarrier set and a second subcarrier set in the OFDM symbol are determined.

It is to be noted that with a guard band for sending no signal excluded, the available subcarriers on the OFDM symbol are divided into the first subcarrier set and the second subcarrier set. It is assumed that a subcarrier index included in the first subcarrier set is $S_1(m)$, where m = 0, 1, ..., Mi-1, and a subcarrier index included in the second subcarrier set is $S_2(m)$, where m = 0, 1, ..., $M_2$-1, $M_1 + M_2 \leq U$, $K \leq M_2 < U$, and indexes in the first subcarrier set and the second subcarrier set do not overlap. Additionally, the first subcarrier set $S_1(m)$ is modulated by $C[S_1(m)]$, where m = 0, 1, ..., Mi-1, $C[S_1(m)]$ may usually be determined according to the communication information sent, and $C[S_1(m)]$ is assumed to be a known value; and the second subcarrier set $S_2(m)$ is modulated by $R[S_2(m)]$, where m = 0, 1, ..., $M_2$-1. It is defined that $C = [S_1(0), S_1(1), ..., S_1(M_1-1)]^T$ and $R = [S_2(0), S_2(1), ..., S_2(M_2-1)]^T$.

In S220, the last K data in the first time domain sequence c(n) corresponding to the first subcarrier set and the projections of the last K data on the basic sensing signals are determined, which includes the following:

In S221, the last K data in the first time domain sequence corresponding to the first subcarrier set are determined.

It is to be noted that c(n) is N-point inverse Fourier transform of the signal sent on the first subcarrier set in S210.

Specifically, c(n) is defined as follows: $c(n) = \sum_{m=0}^{M_1} C[S_1(m)] \, e^{j2\pi \frac{S_1(m)n}{N}}$, n = 0,1,..., N-1. The last K data in the first time domain sequence c(n) are c(N-K), c(N-K+1), ..., c(N-1).

It is to be understood that it is defined that $c = [c(N-K), c(N-K+1), ..., c(N-1)]^T$, where c denotes a vector of the last K data in the first time domain sequence corresponding to the first subcarrier set, that is, a vector corresponding to a first dataset.

In S222, the projections of the vector c corresponding to the last K data in the first time domain sequence corresponding to the first subcarrier set on the basic sensing signals $s_w$ are determined.

It is to be noted that a projection signal of the vector c on the basic sensing signal is $a_w e^{j\emptyset_w}s_w$, w = 0,1,..., W-1, where $a_w = |s_w^H c|$ and denotes a modulus of the projection of the vector c on the vector $s_w$, $\emptyset_w = arg(s_w^H c)$ and denotes a phase of the projection of the vector c on the vector $s_w$, and arg(z) denotes a main value of an argument of a complex number z and ranges from $-\pi$ to $\pi$.

It is to be understood that since the transmitter has the W linearly independent basic sensing signals, multiple projection signals $a_w e^{j\emptyset_w}s_w$, w = 0,1,..., W-1, multiple moduli $a_w$ of the projections of the vector c on the basic sensing signals $s_w$, and multiple phases of the projections of the vector c on the basic sensing signals $s_w$ may be obtained in this step.

In S230, a selected basic sensing signal, that is, the target basic sensing signal to be sent, is determined.

It is to be noted that a maximum value of the moduli $a_w$ of the projections of the vector c on the basic sensing signal $s_w$ and a corresponding index k are determined, where w = 0, 1, 2, ..., W-1, and then the optimal basic sensing signal is determined by the index k corresponding to the maximum modulus.

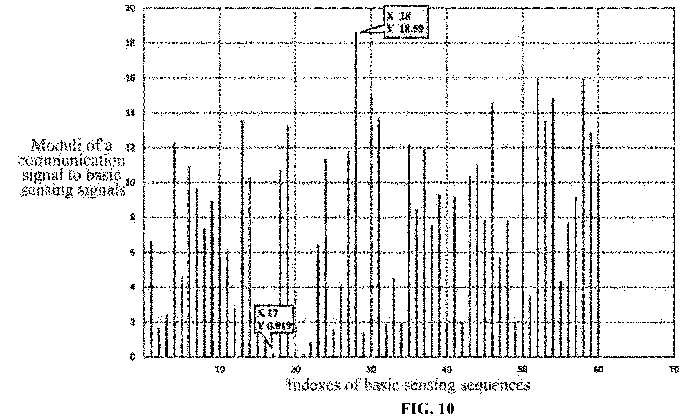

It is to be understood that it is assumed that W = 64, and FIG. 10 is a schematic diagram of the projections of the last 64 data in the first time domain sequence c(n) corresponding to the first subcarrier set on 64 linearly independent basic sensing signals, where linear frequency modulation signals with a length of 64 are selected as the basic sensing signals. As can be seen from FIG. 10, when k = 28, the modulus of the projection of the vector c on the basic sensing signal $s_w$ is the largest, and when k = 55, the modulus is the smallest.

It is to be understood that when A is a determined value, the selection of $s_{28}$ can make greater power saved than the selection of $s_{55}$. In another aspect, when A is a value varying with a projection result of a communication signal on the sensing signal, for example, when $A = a_w$ is selected, the selection of $s_{28}$ can achieve better sensing performance than the selection of $s_{55}$. In this example, k is 28, and the selected basic sensing signal is $s_{28}$.

In S240, last K data in a second time domain sequence r(n) corresponding to the second subcarrier set are determined.

It is to be noted that $r_k = (A - a_k)e^{j\emptyset}s_k + a_w e^{j\emptyset}s_k - c = Ae^{j\emptyset}s_k - c$, where the last K data in the time domain sequence r(n) corresponding to the second subcarrier set are defined as $r_k = [r_k(N-K), r_k(N-K+1), ..., r_k(N-1)]^T$.

In S250, a modulation symbol vector R corresponding to the second subcarrier set is determined.

It is to be noted that $R = Q^H(QQ^H)^{-1}r_k$, where Q is a $K \times M_2$ matrix, and K rows and $M_2$ columns of an N-point inverse Fourier transform matrix are extracted so that Q is obtained. In this example, the extracted rows are lower K rows of the N-point inverse Fourier transform matrix, and indexes of the extracted columns are $S_2(m)$, where m = 0, 1, ..., $M_2$-1.

In S260, a result z(n) of N-point inverse Fourier transform of signals on the first subcarrier set and the second subcarrier set is determined.

It is to be noted that $z(n) = \sum_{m=0}^{M_1} C[S_1(m)] e^{j2\pi\frac{S_1(m)n}{N}} + \sum_{m=0}^{M_2} R[S_2(m)] e^{j2\pi\frac{S_2(m)n}{N}}$, n =

0,1,..., N - 1, where $\sum_{m=0}^{M_1} C[S_1(m)] e^{j2\pi\frac{S_1(m)n}{N}}$ may adopt a calculation result in S221.

In S270, corresponding sensing assistance information about the selected sensing signal is sent.

It is to be noted that the sensing assistance information includes at least one of a sequence, an amplitude, or a phase of the target sensing signal.

In S280, the cyclic prefix is added and the target sensing signal is sent.

It is to be noted that when $\theta$ is the preset value, the target sensing signal is $z(n)e^{j(\theta-\varnothing)}$, n = 0,1,..., N - 1, which is used as a time domain sequence of the useful part of the OFDM symbol and sent after an L-point cyclic prefix is added. When $\theta$ is the value varying with the communication information, $\theta = \varnothing$, and the target sensing signal is z(n) in S260, which is used as the time domain sequence of the useful part of the OFDM symbol and sent after the L-point cyclic prefix is added.

In this example, the optimal sensing signal is selected from multiple basic sensing signals so that the greater power can be saved and the better sensing performance can be achieved.

Example 3

Example 3 provides a signal processing manner where multiple target sensing signals may be simultaneously sent according to phases of last K data in a first time domain sequence c(n) corresponding to a first subcarrier set on multiple basic sensing signals, where the target sensing signals are sent twice on one OFDM symbol.

It is assumed that an OFDM waveform-based integrated sensing and communication symbol includes (L+N) samples, where L denotes the length of a cyclic prefix of the OFDM symbol, and N denotes the length of a useful part of the OFDM symbol and also the number of points of inverse Fourier transform for generating an OFDM signal. It is assumed that the length of the target sensing signals sent on the symbol is K, where K is not greater than the number U of available subcarriers on the OFDM symbol, and U is usually less than N. A transmitter has at most W linearly independent basic sensing signals, where W ≤ K, and the w-th basic sensing signal is $s_w$, where $s_w = [s_w(0), s_w(1), ..., s_w(K-1)]^T$, and w = 0, 1, 2, ..., W-1. The basic sensing signals are orthogonal to each other, that is, $s_w^H s_k = \begin{cases} 1, w = k \\ 0, w \neq k \end{cases}$. W target sensing signals with a length of K are sent on last K samples of the useful part of the OFDM symbol. That is, the sent target sensing signals are $\sum_{w=0}^{W-1} A_w e^{j\theta_w} s_w$. $A_w$ denotes an amplitude of the target sensing signal and is a preset value, $\theta_w$ denotes a phase of the sensing signal, and the phase is a value varying with communication information. Specifically, the phase is determined by a projection of the last K data in the first time domain sequence c(n) corresponding to the first subcarrier set on $s_w$, where the projection is defined below. Based on the preceding assumptions, this example includes, but is not limited to, S310 to S370.

In S310, the first subcarrier set and a second subcarrier set in the OFDM symbol are determined.

It is to be noted that with a guard band for sending no signal excluded, the available subcarriers on the OFDM symbol are divided into the first subcarrier set and the second subcarrier set. It is assumed that a subcarrier index included in the first subcarrier set is $S_1(m)$, where m = 0, 1, ..., Mi-1, and a subcarrier index included in the second subcarrier set is $S_2(m)$, where m = 0, 1, ..., $M_2$-1, $M_1 + M_2 \leq U$, $K \leq M_2 < U$, and indexes in the first subcarrier set and the second subcarrier set do not overlap. Additionally, the first subcarrier set $S_1(m)$ is modulated by $C[S_1(m)]$, where m = 0, 1, ..., Mi-1, $C[S_1(m)]$ may usually be determined according to the communication information sent, and $C[S_1(m)]$ is assumed to be a known value; and the second subcarrier set $S_2(m)$ is modulated by $R[S_2(m)]$, where m = 0, 1, ..., $M_2$-1. It is defined that $C = [S_1(0), S_1(1), ..., S_1(M_1-1)]^T$ and $R = [S_2(0), S_2(1), ..., S_2(M_2-1)]^T$.

In S320, the last K data in the first time domain sequence c(n) corresponding to the first subcarrier set and projections of the last K data on the basic sensing signals $s_w$ are determined, which includes, but is not limited to, the following:

In S321, the last K data in the first time domain sequence corresponding to the first subcarrier set are determined.

It is to be noted that c(n) is N-point inverse Fourier transform of the signal sent on the first subcarrier set in S310. Specifically, c(n) is defined as follows: $c(n) = \sum_{m=0}^{M_1} C[S_1(m)] e^{j2\pi\frac{S_1(m)n}{N}}$, n = 0,1,..., N - 1, and the last K data in the first time domain sequence c(n) are c(N-K), c(N-K+1), ..., c(N-1).

It is to be understood that it is defined that c = [c(N-K), c(N-K+1), ..., c(N-1)]$^T$, where c denotes a vector of the last K data in the first time domain sequence corresponding to the first subcarrier set.

In S322, the projections of the vector c of the last K data on the basic sensing signals $s_w$ are determined.

It is to be noted that a projection signal of the vector c on the basic sensing signal $s_w$ is $a_w e^{j\varphi_w} s_w$, w = 0,1,..., W - 1, where $a_w = |s_w^H c|$ and denotes a modulus of the projection of the vector c on the vector $s_w$, $\varphi_w = arg(s_w^H c)$ and denotes a phase of the projection of the vector c on the vector $s_w$, and arg(z) denotes a main value of an argument of a complex number z and ranges from $-\pi$ to $\pi$.

It is to be understood that since the transmitter has the W linearly independent basic sensing signals, multiple projection signals $a_w e^{j\emptyset_w} s_w$, w = 0,1,..., W - 1, multiple moduli $a_w$ of the projections of the vector c on the basic sensing signals $s_w$, and multiple phases of the projections of the vector c on the basic sensing signals $s_w$ may be obtained in this step.

In S330, last K data in a second time domain sequence r(n) corresponding to the second subcarrier set are determined.

It is to be noted that the last K data in the second time domain sequence r(n) corresponding to the second subcarrier set are defined as r = [r(N-K), r(N-K+1), ..., r(N-1)]$^T$, where $r = \sum_{w=0}^{W-1} A_w e^{j\theta_w} s_w - c$, and $\theta_w = \varphi_w$, w = 0,1,..., W - 1.

It is to be noted that when the preceding basic sensing information satisfies only linear independence and does not satisfy an orthogonal characteristic, it is assumed that **a** = [$a_0 e^{j\emptyset_0}$, $a_1 e^{j\emptyset_1}$......$a_{W-1} e^{j\emptyset_{W-1}}$]$^T$, **S** = [$s_0$, $s_1$......$s_{W-1}$], and then the vector **a** = (**S**$^H$**S**)$^{-1}$**S**$^H$**c**. Assuming that the w-th element of the vector *a* is *a* (w), it is obtained in S320 that $a_w = |a(w)|$ and denotes the modulus of the projection of the vector c on the vector $s_w$, and $\varphi_w = arg(a(w))$ and denotes the phase of the projection of the vector c on the vector $s_w$.

$$\|r\|^2 = \left(\sum_{w=0}^{W-1} A_w e^{j\varphi_w} s_w - c\right)^H \left(\sum_{w=0}^{W-1} A_w e^{j\varphi_w} s_w - c\right)$$

$$= c^H c + \sum_{w=0}^{W-1}(A_w^2 - 2A_w a_w).$$

It is to be understood that when $A_w$ is a determined value, the greater $a_w$, the smaller $\|r\|^2$, indicating a smaller power consumption under the same conditions. In another aspect, when $A_w$ is a value varying with a communication signal, $\|r\|^2$ has a minimum value when $A_w = a_w$.

In S340, a modulation symbol vector R corresponding to the second subcarrier set is determined.

It is to be noted that $R = Q^H(QQ^H)^{-1}r$, where Q is a K×M$_2$ matrix, and K rows and M$_2$ columns of an N-point inverse Fourier transform matrix are extracted so that Q is obtained. In this example, the extracted rows are lower K rows of the N-point inverse Fourier transform matrix, and indexes of the extracted columns are S$_2$(m), where m = 0, 1, ..., M$_2$-1.

In S350, a result of N-point inverse Fourier transform of the time domain sequences for the first subcarrier set and the second subcarrier set is determined.

It is to be noted that $z(n) = \sum_{m=0}^{M_1} C[S_1(m)] e^{j2\pi\frac{S_1(m)n}{N}} + \sum_{m=0}^{M_2} R[S_2(m)] e^{j2\pi\frac{S_2(m)n}{N}}$, n = 0,1,..., N - 1, where $\sum_{m=0}^{M_1} C[S_1(m)] e^{j2\pi\frac{S_1(m)n}{N}}$ may adopt a calculation result in S321.

In S360, sensing assistance information is sent.

It is to be noted that the sensing assistance information includes at least one of sequences, amplitudes, or phases of the target sensing signals, and the sensing assistance information is sent to a communication receiving end before a transmitting end sends the preceding OFDM.

In S370, the cyclic prefix is added and the target sensing signals are sent.

It is to be noted that when $\theta$ is a preset value, the target sensing signals are $z(n)e^{j(\theta-\emptyset)}$, n = 0,1,..., N - 1, which is used as a time domain sequence of the useful part of the OFDM symbol and sent after an L-point cyclic prefix is added. When $\theta$ is a value varying with the communication information, $\theta = \emptyset$, and the target sensing signals are z(n) in S350, which is used as the time domain sequence of the useful part of the OFDM symbol and sent after the L-point cyclic prefix is added.

Example 4

Example 4 provides a signal processing manner where T target sensing signals are sent at a time, where the sent T target sensing signals are selected from W target sensing signals, and T<W.

It is assumed that an OFDM waveform-based integrated sensing and communication symbol includes (L+N) samples, where L denotes the length of a cyclic prefix of the OFDM symbol, and N denotes the length of a useful part of the OFDM symbol and also the number of points of inverse Fourier transform for generating an OFDM signal. It is assumed that the length of the target sensing signals sent on the symbol is K, where K is not greater than the number U of available subcarriers on the OFDM symbol, and U is usually less than N. A transmitter has at most W linearly independent basic sensing signals ($W \le K$), and the w-th basic sensing signal is $s_w$, where $s_w = [s_w(0), s_w(1), ..., s_w(K-1)]^T$, and w = 0, 1, 2, ..., W-1. The T target sensing signals with a length of K are sent on last K samples of the useful part of the OFDM symbol, where T is less than W. It is assumed that the basic sensing signals are orthogonal to each other, that is,

$$s_w^H s_k = \begin{cases} 1, w = k \\ 0, w \ne k \end{cases}$$

. $A_w$ denotes an amplitude of the target sensing signal and is a preset value, $\theta_w$ denotes a phase of the target sensing signal, and the phase is a value varying with communication information. Specifically, the phase is determined by a projection of last K data in a first time domain sequence c(n) corresponding to a first subcarrier set on $s_w$, where the projection is defined below. Based on the preceding assumptions, the determination of T target basic sensing signals in this example includes at least S410 to S480.

In S410, the first subcarrier set and a second subcarrier set in the OFDM symbol are determined.

It is to be noted that with a guard band for sending no signal excluded, the available subcarriers on the OFDM symbol are divided into the first subcarrier set and the second subcarrier set. It is assumed that a subcarrier index included in the first subcarrier set is $S_1(m)$, where m = 0, 1, ..., Mi-1, and a subcarrier index included in the second subcarrier set is $S_2$(m), where m = 0, 1, ..., $M_2$-1, $M_1 + M_2 \le U$, $K \le M_2 < U$, and indexes in the first subcarrier set and the second subcarrier set do not overlap. The first subcarrier set $S_1(m)$ is modulated by $C[S_1(m)]$, where m = 0, 1, ..., Mi-1, $C[S_1(m)]$ may usually be determined according to the communication information sent, and $C[S_1(m)]$ is assumed to be a known value; and the second subcarrier set $S_2(m)$ is modulated by $R[S_2(m)]$, where m = 0, 1, ..., $M_2$-1. It is defined that $C = [S_1(0), S_1(1), ..., S_1(M_1-1)]^T$ and $R = [S_2(0), S_2(1), ..., S_2(M_2-1)]^T$.

In S420, the last K data in the first time domain sequence c(n) corresponding to the first subcarrier set and projections of the last K data on the basic sensing signals $s_w$ are determined, which includes, but is not limited to, the following:

In S421, the last K data in the first time domain sequence corresponding to the first subcarrier set and a vector c of the last K data are determined.

It is to be noted that c(n) is N-point inverse Fourier transform of the signal sent on the first subcarrier set in S410.

Specifically, c(n) is defined as follows: $c(n) = \sum_{m=0}^{M_1} C[S_1(m)] \, e^{j2\pi \frac{S_1(m)n}{N}}$ , n = 0,1,..., N - 1. The last K data in the first time domain sequence c(n) are c(N-K), c(N-K+1), ..., c(N-1).

It is to be understood that it is defined that $c = [c(N-K), c(N-K+1), ..., c(N-1)]^T$, where c denotes a vector of the last K data in the first time domain sequence corresponding to the first subcarrier set.

In S422, the projections of the vector c of the last K data in the first time domain sequence corresponding to the first subcarrier set on the basic sensing signals $s_w$ are determined.

It is to be noted that a projection signal of the vector c on the basic sensing signal is $a_w e^{j\varnothing_w} s_w$, w = 0,1,..., W - 1,

where $a_w = |s_w^H c|$ and denotes a modulus of the projection of the vector c on the vector $s_w$, $\varnothing_w = arg(s_w^H c)$ and denotes a phase of the projection of the vector c on the vector $s_w$, and arg(z) denotes a main value of an argument of a complex number z and ranges from $-\pi$ to $\pi$.

It is to be understood that since the transmitter has the W linearly independent basic sensing signals, multiple projection signals $a_w e^{j\varnothing w} s_w$, w = 0,1,..., W - 1, multiple moduli $a_w$ of the projections of the vector c on the basic sensing signals $s_w$, and multiple phases of the projections of the vector c on the basic sensing signals $s_w$ may be obtained in this step.

In S430, a selected basic sensing signal set is determined.

It is to be noted that a set of indexes corresponding to T maximum values of the moduli $a_w$, w = 0,1,..., W - 1 of the vector c on the basic sensing signals $s_w$ is determined, where basic sensing signals corresponding to these indexes are selected sensing signals.

It is to be noted that the selection of T sensing signals from W sensing signals generates $A_W^T$ combinations. T maximum values $a_w$ are selected according to the magnitudes of the moduli $a_w$, and the set t of indexes corresponding to the T maximum values is the selected basic sensing signal set.

In S440, last K data in a second time domain sequence r(n) corresponding to the second subcarrier set and a vector r corresponding to the last K data are determined.

It is to be noted that the last K data in the second time domain sequence r(n) corresponding to the second subcarrier set are defined as r = [r(N-K), r(N-K+1), ..., r(N-1)]$^T$, where $r = \sum_{T=0}^{T-1} A_t e^{j\theta_t} s_t - c$, $\theta_t = \varphi_t$, and t denotes the set of indexes of the selected T target sensing signals.

It is to be noted that when the preceding basic sensing information satisfies only linear independence and does not satisfy an orthogonal characteristic, the last K data in the second time domain sequence r(n) corresponding to the second subcarrier set and the vector r corresponding to the last K data may be determined with reference to the manners in S330.

In 450, a modulation symbol vector R corresponding to the second subcarrier set is determined.

It is to be noted that $R = Q^H(QQ^H)^{-1}r$, where Q is a K×M$_2$ matrix, and K rows and M$_2$ columns of an N-point inverse Fourier transform matrix are extracted so that Q is obtained. In this example, the extracted rows are lower K rows of the N-point inverse Fourier transform matrix, and indexes of the extracted columns are S$_2$(m), where m = 0, 1, ..., M$_2$-1.

In S460, a result z(n) of N-point inverse Fourier transform of signals on the first subcarrier set and the second subcarrier set is determined.

It is to be noted that $z(n) = \sum_{m=0}^{M_1} C[S_1(m)] e^{j2\pi \frac{S_1(m)n}{N}} + \sum_{m=0}^{M_2} R[S_2(m)] e^{j2\pi \frac{S_2(m)n}{N}}$, $n = 0,1,..., N - 1$, where $\sum_{m=0}^{M_1} C[S_1(m)] e^{j2\pi \frac{S_1(m)n}{N}}$ may adopt a calculation result in S421.

In S470, sensing assistance information about the sensing signals is sent.

It is to be noted that the sensing assistance information includes at least one of sequences, amplitudes, or phases of the target sensing signals, and the sensing assistance information is sent to a communication receiving end before a transmitting end sends the preceding OFDM.

In S480, the cyclic prefix is added and the target sensing signals are sent.

It is to be noted that when $\theta$ is a preset value, the target sensing signals are $z(n)e^{j(\theta-\varphi)}$, n = 0,1,..., N - 1, which is used as a time domain sequence of the useful part of the OFDM symbol and sent after an L-point cyclic prefix is added. When $\theta$ is a value varying with the communication information, $\theta = \varphi$, and the target sensing signals are z(n) in S460, which is used as the time domain sequence of the useful part of the OFDM symbol and sent after the L-point cyclic prefix is added.

In this example, T optimal sensing signals are selected from the W basic sensing signals so that the greater power can be saved and the better sensing performance can be achieved.

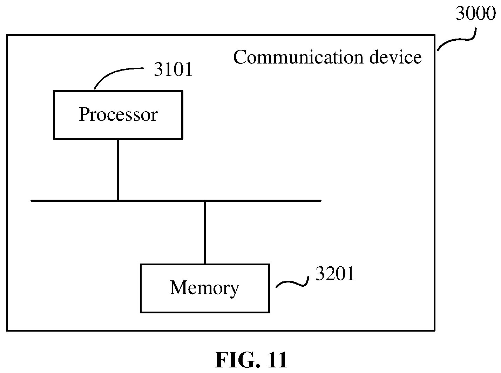

FIG. 11 is a structural diagram of a communication device according to an embodiment of the present application. As shown in FIG. 11, a communication device 3000 includes a memory 3101 and a processor 3201. One or more memories 3101 and one or more processors 3201 may be provided. One memory 3101 and one processor 3201 are shown as an example in FIG. 11. The memory 3101 and the processor 3201 in the communication device may be connected via a bus or in other manners. The connection via a bus is shown as an example in FIG. 11.

As a computer-readable storage medium, the memory 3101 may be configured to store software programs, computer-executable programs, and modules, such as program instructions/modules corresponding to the method according to any embodiment of the present application. The processor 3201 performs the method according to any one of the preceding embodiments by executing the software programs, instructions, and modules stored in the memory 3101.

The memory 3101 may mainly include a program storage region and a data storage region. The program storage region may store an operating system and an application program required by at least one function. Additionally, the memory 3101 may include a high-speed random-access memory and may further include a non-volatile memory such as at least one magnetic disk memory, a flash memory, or another non-volatile solid-state memory. In some examples, the memory 3101 further includes memories remotely disposed relative to the processor 3201, and these remote memories may be connected to the device via a network. Examples of the network include, but are not limited to, the Internet, an intranet, a local area network, a mobile communication network, and a combination thereof.

The communication device in the embodiment of the present application may be a device with a wireless communication transceiving function or an apparatus or chip system in a device with a wireless communication transceiving function. The communication device may be deployed on land (for example, indoor or outdoor, roadside, handheld, or in-vehicle), deployed on the water surface (such as a ship), or deployed in the air (for example, an aircraft, balloon, or satellite). The communication device in the embodiment of the present application may be a terminal device, a network device, or a mobile device such as a car in the Internet of vehicles.

An embodiment of the present application provides a communication system including a memory and a processor. One or more memories and one or more processors may be provided. One memory and one processor are used as an example. The memory and the processor in the communication system may be connected via a bus or in other manners. The connection via a bus is used as an example.

As a computer-readable storage medium, the memory may be configured to store software programs, computer-executable programs, and modules, such as program instructions/modules corresponding to the method according to any embodiment of the present application. The processor performs the method according to any one of the preceding embodiments by executing the software programs, instructions, and modules stored in the memory.

The memory may mainly include a program storage region and a data storage region. The program storage region may store an operating system and an application program required by at least one function. Additionally, the memory may include a high-speed random-access memory and may further include a non-volatile memory such as at least one magnetic disk memory, a flash memory, or another non-volatile solid-state memory. In some examples, the memory further includes memories remotely disposed relative to the processor, and these remote memories may be connected to the device via a network. Examples of the network include, but are not limited to, the Internet, an intranet, a local area network, a mobile communication network, and a combination thereof.

An embodiment of the present application provides a computer-readable storage medium storing computer-executable instructions for performing the signal processing method according to any embodiment of the present application.

An embodiment of the present application provides a computer program product. The computer program product includes a computer program or computer instructions stored in a computer-readable storage medium. A processor of a computer device is configured to read the computer program or the computer instructions from the computer-readable storage medium and execute the computer program or the computer instructions, causing the computer device to perform the signal processing method according to any embodiment of the present application.

The system architecture and application scenarios described in embodiments of the present application are intended to more clearly explain the technical solutions in the embodiments of the present application and not to limit the technical solutions in the embodiments of the present application. As is known to those skilled in the art, with the evolution of the system architecture and the emergence of new application scenarios, the technical solutions in the embodiments of the present application are also applicable to similar technical problems.

It is to be understood by those having ordinary skill in the art that some or all steps of the preceding method and function modules/units in the preceding system or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a random-access memory (RAM), a read-only memory (ROM), an electrically erasable programmable read-only memory (EEPROM), a flash memory, or other memory technologies, a compact disc read-only memory (CD-ROM), a digital versatile disc (DVD), or other optical disk storages, a magnetic cassette, a magnetic tape, a magnetic disk, or other magnetic storage devices, or any other medium that can be used for storing desired information and that can be accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

Terms "component", "module", and "system" used in the specification are intended to represent a computer-related entity, hardware, firmware, a combination of hardware and software, software, or software in execution. For example, the component may be, but is not limited to, a process running on a processor, a processor, an object, an executable, a thread of execution, a program, or a computer. By way of illustration, an application running on a computing device and the computing device may both be components. One or more components may reside in a process or thread of execution and may be located on one computer or distributed between two or more computers. Additionally, these components may be executed from various computer-readable media storing various data structures. The components may communicate by way of local or remote processes according to, for example, a signal having one or more data packets (for example, data from two components interacting with another component in a local system, distributed system, or network such as the Internet interacting with another system by way of a signal).

Some embodiments of the present application are described above with reference to the drawings and are not intended to limit the scope of the claims of the present application. Any modifications, equivalent substitutions, and improvements made by those skilled in the art without departing from the scope and substantive content of the present application fall within the scope of the present application.

**Claims**

1. A signal processing method, comprising:

   determining a first subcarrier set and a second subcarrier set in to-be-transmitted information, wherein a first time domain sequence corresponding to the first subcarrier set is obtained according to communication information;
   obtaining a projection signal according to a vector corresponding to a first dataset and a target signal, wherein the first dataset comprises at least part of data in the first time domain sequence corresponding to the first subcarrier set;
   obtaining a second time domain sequence corresponding to the second subcarrier set according to the projection signal;
   superimposing the first time domain sequence and the second time domain sequence to obtain a time domain signal corresponding to the to-be-transmitted information; and
   sending the time domain signal.

2. The method of claim 1, wherein obtaining the second time domain sequence corresponding to the second subcarrier set according to the projection signal comprises:

   obtaining a second dataset according to the projection signal, wherein the second dataset comprises at least part of data in the second time domain sequence corresponding to the second subcarrier set; and
   obtaining the second time domain sequence corresponding to the second subcarrier set according to the second dataset.

3. The method of claim 2, wherein obtaining the second dataset according to the projection signal comprises:

   obtaining a phase of the projection signal according to the projection signal; and
   obtaining the second dataset according to the phase.

4. The method of claim 3, wherein the projection signal comprises at least one projection sub-signal; and obtaining the phase of the projection signal according to the projection signal comprises:

   obtaining a modulus corresponding to each of the at least one projection sub-signal according to each of the at least one projection sub-signal; and
   obtaining a phase corresponding to a target projection sub-signal of the at least one projection sub-signal according to the modulus corresponding to each of the at least one projection sub-signal.

5. The method of any one of claims 2 to 4, wherein obtaining the second time domain sequence corresponding to the second subcarrier set according to the second dataset comprises:

   obtaining a modulation symbol corresponding to the second subcarrier set according to the second dataset; and
   obtaining the second time domain sequence corresponding to the second subcarrier set according to the modulation symbol corresponding to the second subcarrier set.

6. The method of any one of claims 1 to 4, wherein obtaining the projection signal according to the vector corresponding to the first dataset and the target signal comprises:
   obtaining the projection signal according to a projection of the vector corresponding to the first dataset on the target signal.

7. The method of any one of claims 1 to 4, further comprising:
   sending assistance information about the target signal, wherein the assistance information about the target signal comprises at least one of:

   a sequence corresponding to the target signal;
   an amplitude corresponding to the target signal; or

a phase corresponding to the target signal.

8. The method of any one of claims 1 to 4, wherein the first dataset comprises last K data in the first time domain sequence corresponding to the first subcarrier set, and K is an integer.

9. The method of any one of claims 1 to 4, wherein the second dataset comprises last K data in the second time domain sequence corresponding to the second subcarrier set, and K is an integer.

10. The method of claim 4, wherein the target projection sub-signal comprises one or more projection sub-signals.

11. A signal processing method, comprising:

   receiving a to-be-processed signal, wherein time domain data corresponding to the to-be-processed signal comprise a first time domain sequence and a second time domain sequence; and
   obtaining a target signal according to the second time domain sequence.

12. The method of claim 11, wherein obtaining the target signal according to the second time domain sequence comprises:

   obtaining a projection signal according to the second time domain sequence; and
   obtaining the target signal according to the projection signal.

13. The method of claim 11 or 12, wherein obtaining the target signal according to the second time domain sequence comprises:

   obtaining the target signal according to the second time domain sequence and assistance information about the target signal;
   wherein the assistance information about the target signal comprises at least one of:

      a sequence corresponding to the target signal;
      an amplitude corresponding to the target signal; or
      a phase corresponding to the target signal.

14. The method of claim 12, wherein obtaining the projection signal according to the second time domain sequence comprises:

   according to the second time domain sequence, obtaining a modulation symbol corresponding to a second subcarrier set corresponding to the second time domain sequence;
   obtaining a second dataset according to the modulation symbol, wherein the second dataset comprises at least part of data in the second time domain sequence corresponding to the second subcarrier set; and
   obtaining the projection signal according to the second dataset.

15. A communication device, comprising:

   at least one processor; and
   at least one memory configured to store at least one program;
   wherein the at least one program, when executed by the at least one processor, causes the at least one processor to perform the signal processing method of any one of claims 1 to 14.

16. A computer-readable storage medium storing computer-executable instructions for performing the signal processing method of any one of claims 1 to 14.

17. A computer program product, comprising a computer program or computer instructions stored in a computer-readable storage medium, wherein a processor of a computer device is configured to read the computer program or the computer instructions from the computer-readable storage medium and execute the computer program or the computer instructions, causing the computer device to perform the signal processing method of any one of claims 1 to 14.

**FIG. 1**

**EP 4 572 216 A1**

**FIG. 2**

18

40

Signal
processing

S300  Obtain a second
time domain
sequence
corresponding to a
second subcarrier
set according to a
projection signal

Obtain a second dataset
according to the projection
signal  S310

Obtain the second time domain
sequence corresponding to the
second subcarrier set according
to the second dataset  S320

**FIG. 3**

40

Signal
processing

S310 — Obtain a second
dataset according
to a projection
signal

Obtain a phase of the projection
signal according to the
projection signal — S311

Obtain the second dataset
according to the phase — S312

**FIG. 4**

40

Signal
processing

S311 — Obtain a phase of a
projection signal
according to the
projection signal

Obtain a modulus
corresponding to each
projection sub-signal according
to each projection sub-signal — S3111

Obtain a phase corresponding to
a target projection sub-signal
according to the modulus
corresponding to each
projection sub-signal — S3112

**FIG. 5**

40

Signal
processing

S320 — Obtain a second
time domain
sequence
corresponding to a
second subcarrier
set according to a
second dataset

Obtain a modulation symbol
corresponding to the second
subcarrier set according to the
second dataset — S321

Obtain the second time domain
sequence corresponding to the
second subcarrier set according
to the modulation symbol
corresponding to the second
subcarrier set — S322

**FIG. 6**

40

Receive a to-be-processed signal

50

Signal processing

Receive the to-be-processed signal ∿ S1000

Obtain a target signal according to a second time domain sequence ∿ S2000

**FIG. 7**

50

Signal
processing

S2000

Obtain a target
signal according to
a second time
domain sequence

Obtain a projection signal
according to the second time
domain sequence

S2100

Obtain the target signal
according to the projection
signal

S2200

**FIG. 8**

50

Signal
processing

S2100

Obtain a projection
signal according to
a second time
domain sequence

According to the second time
domain sequence, obtain a
modulation symbol corresponding
to a second subcarrier set
corresponding to the second time
domain sequence

S2110

Obtain a second dataset according
to the modulation symbol

S2120

Obtain the projection signal
according to the second dataset

S2130

**FIG. 9**

**FIG. 10**

3000

Communication device

3101

Processor

3201

Memory

**FIG. 11**

## INTERNATIONAL SEARCH REPORT

| International application No. |
| --- |
| **PCT/CN2023/125690** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC：H04L H04W H04B

Documentation searched other than minimum documentation to the extent that such documents are included in the fields searched

Electronic data base consulted during the international search (name of data base and, where practicable, search terms used)

IEEE, CJFD, CNTXT, DWPI, ENTXT, ENTXTC, VEN, WPABS, WPABSC: 第二时域序列, 第一时域序列, 感知, 接收, 目标信号, 时域, 时域序列, 通感, 通信感知, 投影, 序列, 子载波, Second, first, time domain sequence, percept, sense, radar, receive, time domain, sequence, synesthesia, communication, project, subcarrier,

### C. DOCUMENTS CONSIDERED TO BE RELEVANT

| Category* | Citation of document, with indication, where appropriate, of the relevant passages | Relevant to claim No. |
| --- | --- | --- |
| X | CN 112398601 A (HUAWEI TECHNOLOGIES CO., LTD.) 23 February 2021 (2021-02-23) description, paragraphs 68-172 | 11-17 |
| A | CN 112866168 A (SHANGHAI JIAO TONG UNIVERSITY) 28 May 2021 (2021-05-28) entire document | 1-17 |
| A | US 2021076367 A1 (HUAWEI TECHNOLOGIES CO., LTD.) 11 March 2021 (2021-03-11) entire document | 1-17 |
| A | 程翔 等 (CHENG, Xiang et al.). "车联网通信感知一体化研究: 现状与发展趋势 (Integrated Sensing and Communications for Internet of Vehicles: Current Status and Development Trend)" 通信学报 (Journal on Communications), Vol. 43, No. 8, 31 August 2022 (2022-08-31), entire document | 1-17 |
| A | TIAN, Min et al. "Multiobjective Optimal Waveform Design for TDSOFDM Integrated Radar and Communication Systems" 2021 CIE International Conference on Radar (Radar), 31 December 2021 (2021-12-31), entire document | 1-17 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 December 2023** | **12 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/125690**

| Patent document cited in search report | | | Publication date (day/month/year) | Patent family member(s) | | | Publication date (day/month/year) |
|---|---|---|---|---|---|---|---|
| CN | 112398601 | A | 23 February 2021 | US | 2022263640 | A1 | 18 August 2022 |
| | | | | WO | 2021027305 | A1 | 18 February 2021 |
| CN | 112866168 | A | 28 May 2021 | | None | | |
| US | 2021076367 | A1 | 11 March 2021 | WO | 2021047279 | A1 | 18 March 2021 |
| | | | | EP | 4022351 | A1 | 06 July 2022 |
| | | | | CN | 114402222 | A | 26 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211620318